# EUROPEAN PATENT APPLICATION

(11) **EP 3 530 635 A1**
(43) Date of publication of application: **28.08.2019**
(21) Application number: 19155805.5
(22) Date of filing: 06.02.2019
(51) Int. Cl.: C04B 41/86, B28B 11/04

(54) **METHOD OF APPLYING A SURFACE COATING PRODUCT AND DEVICE FOR CARRYING OUT SAID METHOD IN GLAZE COATING ON CERAMIC PIECE PRODUCTION LINES**

(30) Priority: 22.02.2018 ES 201830161
(71) Applicant: Asitec Ceramic, S.L., 12110 Alcora (ES)
(72) Inventor: BARREDA FERRANDO, Juan José, 12110 ALCORA (ES)
(74) Representative: Sanz-Bermell Martinez, Alejandro

(57) **Abstract**

The method comprises the steps of forming a laminar layer of the coating product, cooling the laminar layer at a temperature below freezing point, and applying the frozen laminar layer on the corresponding surface.

The device comprises a storage receptacle for storing the coating product in suspension or a supply line for supplying the coating product in suspension, or a mixing unit producing the coating product in suspension, a supply and metering element for supplying and metering the coating product onto a receiving surface, connected to the storage receptacle, to the supply line or to the mixing unit, a conveying system for conveying the coating product from the supply area to the application area, and a freezing device for freezing the coating product

## Description

The present invention belongs to the sector of the art of the manufacture for the treatment of surfaces, usually surfaces of industrial pieces, by means of adding a coating usually in a liquid or paste state.

It consists of a method of applying a coating product on surfaces with the features of claim 1. The invention also describes an embodiment of a device for the application of the method of claim 1.

In particular the invention can be applied to, including, the manufacture of ceramic pieces.

### State of the art

Glazing consists of applying, by means of different methods, one or more layers of a glassy product covering the surface of a piece, particularly a ceramic piece. This treatment is performed to impart to the fired product a series of technical and aesthetic properties, Such as: impermeability, ease of cleaning, shine, color, surface texture, chemical resistance, and mechanical strength.

In processes of manufacturing ceramic pieces, and particularly ceramic tiles, pre-prepared glazes are normally used, usually liquid glazes in aqueous suspension or powder glazes, where mixing with water is necessary in the case of powder glazes, usually at a proportion of about 60%-70% glaze powder and 30%-40% water, for their correct application by means of the most commonly used methods.

One of the glazing methods most used in the line manufacture of ceramic pieces is by means of a bell-type glazing process. In this process, the glaze in aqueous suspension is dropped onto a convex bell-shaped element, and the ceramic pieces moving along a conveyor pass under the curtain of glaze falling over the edge of the bell-shaped element. Several examples of these bell-type glazing systems can be found at http://www.certech.it/sistemas-de-esmaltado/sistemas-automaticos-de-aplicacion-esmaltes-granillas-y-engobe/?lang=es or http://www.maincer.es/71061 es/Campana-para-esmaltado/.

Another glazing method that is widely used in the line manufacture of ceramic pieces is the veil glazing system, in which a glaze diffuser arranged transverse to the conveying system for conveying the ceramic pieces dispenses the glaze in the form of a veil under which the pieces pass, and the glaze is applied on them. An example of a veil glaze application system can be found at www.maincer.es/71173_es/Aplicación-esmalte-a-filera-/-vela/.

While these methods discussed in the glazing process during the line manufacture of ceramic pieces are the ones most used in industry, the processes in which the ceramic piece passes under a free-falling curtain of glaze have a series of drawbacks.

One of the mentioned drawbacks is water consumption because, in order for the glaze to fall correctly and spread out uniformly over the piece, the aqueous suspension in which it is found must contain between about 30% and 40% water. The water consumption entails, in addition to a significant cost, the consumption of a very needed resource for the sustainability of the planet, so it is necessary, to the extent possible, to reduce the consumption of this natural resource in industry. Furthermore, if the glaze is acquired already mixed with water, the transport cost also includes the weight of the added water.

Another drawback of these systems is the amount of suspension that is poured out of the piece, which must always be greater than the amount required to achieve suitable distribution of the product on the surface, so there is always a poured product excess, and all the excess product must be collected in a collecting tray, and then filtered and reused, therefore the applied product may lose some of its properties. However, a certain amount of this product is wasted since it is additionally poured onto the conveying system and can drip out of the vessel. Still, the glaze in suspension that is poured into the vessel and recirculated for later application may contain unwanted dirt and impurities. Another added problem is that the conveying system on which the ceramic pieces are moved has to be cleaned, because, otherwise, the glaze built up on it may cause the malfunction of the conveying system, unevenness of the pieces, and ultimately a worse distribution of the glaze, which will result in a lower finished product quality.

Additionally, the surface finish of the ceramic pieces in which glazing is performed by means of systems in which the ceramic piece is passed under a free-falling curtain of glaze can be imperfect. Due to the fluidity of the glaze in suspension and the speed of the piece on the conveying system, wrinkles or irregularities may be created on the glaze surface. This gives the finished piece a less attractive appearance than pieces in which the glaze surface does not show said wrinkles. Usually, crescent-shaped wrinkles occur in bell-type glazing systems, while straight wrinkles transverse to the direction of forward movement of the piece occur in veil glazing systems.

There are also other glazing methods, including, dipping in a glaze bath or applying by means of a brush. These methods, in addition to being less suitable for the line manufacture of ceramic pieces, among other reasons because of the time of application, also have the water expenditure problem, because it is necessary for the glaze suspension in water to contain a high percentage of water for its correct application.

Therefore, and in view of the mentioned drawbacks, a method is provided for applying glaze on ceramic pieces in a production line which allows performing a higher quality surface finish with a layer of glaze of smaller thickness, uses a smaller amount of water than that required by the systems most used today in industry, which prevents the loss of glaze during the application, requires less cleaning of the devices on the production line, such as the conveying system, for example, and produces a more uniform and wrinkle-free surface finish of the glaze on the ceramic piece, and a device for carrying out said method.

### Description of the invention

The object of the present invention is a method of applying a coating product, particularly a product that is usually supplied in liquid or paste state, on a corresponding surface. Particularly, the coating product is a glaze and the surface on which it is applied is a ceramic piece.

Said method comprises the following steps:
- forming a laminar layer of the coating product,
- cooling the laminar layer at a temperature below freezing point
- moving the frozen laminar layer to the point of application
- applying the frozen laminar layer on the corresponding surface

According to a preferred embodiment, it also comprises a previous step of pre-cooling the coating product.

According to a particular embodiment, having an application in the ceramic industry, the following operations will be carried out,
- Preparing the glaze; if the glaze is received in dry state, the preparation of the glaze will include being mixed with water, up to 20%, and particularly up to 15%; also mixing it with other chemical additives which allow regulating viscosity and deformability of the frozen plate of the coating product is envisaged;
- Optionally, pre-cooling the glaze, prior to freezing it; pre-cooling allows reducing freezing product consumption, because the glaze must be frozen in a continuous cycle, and the thermal difference between the temperature of the glaze before freezing, and the temperature it must be at once it is frozen will be smaller;
- Supplying the glaze to a freezing plate by means of a metering device, said freezing plate preferably formed on an endless conveyor belt;
- Preferably, regulating and calibrating the thickness of the laminar plate of glaze; this regulation can be performed by means of rollers, opposite plates, an extrusion nozzle, or others;
- Moving the formed plate to the supply area; and
- Supplying the laminar plate of glaze to the ceramic piece transit area, and depositing it on the surface of said piece, with the shape and dimensions matching, or exceeding those dimensions by a few millimeters, such that the coating of the entire surface of the piece to be glazed is guaranteed.

As for the unglazed pieces (referred to as bisque or biscuit), they come from a pressed clay drying unit, and this drying unit heats the piece up, the pieces reaching the glazing area hot, so melting is instantaneous once the frozen glaze comes into contact with the surface of the hot piece.

The aforementioned drawbacks are resolved by means of this method.

With this glazing method, the proportion of water required in the aqueous suspension of the glaze is about 15% water, since the mixture does not have to be too fluid for application, as occurs with other glazing systems like the ones described above.

During the melting of the frozen mixture of glaze in aqueous suspension on the piece, the glaze is applied on the entire surface, even on the different relief patterns the piece may have, such that the glaze forms a homogeneous layer on said surface.

According to another aspect of the invention, there is proposed, additionally, a device for a particular application of the described method, said application being the glazing of ceramic pieces in a production line. The device comprises substantially the following elements:
- A storage receptacle for storing the glaze in suspension or a supply line for supplying the glaze in suspension, or a mixing unit producing the glaze in suspension. Optionally, in said receptacle, or in said supply line, or in said mixing unit, there can be arranged pre-cooling means, such as cold equipment, or the circulation through pipes of liquefied gases, for pre-cooling the mixture of the glaze in aqueous suspension preferably at a temperature close to the freezing temperature, and thus facilitating the subsequent freezing process.
- A supply and metering element for supplying and metering the glaze onto a receiving surface, connected to the storage receptacle, to the supply line or to the mixing unit, said receiving surface usually being a freezing plate.
- A conveying system for conveying the glaze; preferably the freezing plate is formed by the base or conveyor belt of the conveying system; the glaze from the receptacle, from the supply line or from the mixing unit is metered and applied on the freezing plate, usually the surface of the conveying system.
- A freezing device for freezing the glaze. Said freezing device for freezing the glaze can be arranged above the conveying system, below it, or both; the freezing device will usually be arranged in a closed chamber that the conveyor will go through at least in the area facing the supply; the conveying system can go through said freezing device. The freezing device can be a cold device based on condensers, or it can be a circulation loop for a liquefied gas such as nitrogen, oxygen or carbon dioxide, which are at temperatures close to -200 °C in liquid state and at atmospheric pressure.
- An enclosure in which at least some of the aforementioned elements are arranged, said elements being the freezing plate and the freezing device, and at least a portion of the conveying system. The enclosure forms a closed chamber. Optionally, the closed chamber will be provided with a chilling system, so as to guarantee that high ambient temperatures do not affect the glaze freezing process.

Thus, the glaze in aqueous suspension is in the glaze storage receptacle or is supplied by a supply line or is produced in a mixer. There is provided a supply device which will have volumetric and/or flow rate control over the metered glaze. Said supply element. In one exemplary embodiment of the invention, the receptacle is a hopper, and the supply element is a box fitting in the lower opening of the hopper, and in which the supply is regulated by means of, for example, a rotating gate, with dynamic flow control and an adjustable stop. In another embodiment of the invention, the supply element is a valve or a set of valves, which are regulated manually or automatically.

Said supply element supplies the mixture of glaze in aqueous suspension on the freezing plate, usually the surface of the conveyor device. In one embodiment of the invention, the conveyor device is formed by a belt of non-stick material operated by means of at least one motor. One end of the conveyor device is arranged on the ceramic piece conveyance line on which the ceramic pieces to be glazed are moved, at the smallest distance possible so as to allow the passage of said ceramic pieces between the conveyor device and the ceramic piece conveyance line.

The supply of the glaze on the conveyor belt can be performed in a continuous manner or in a discontinuous or intermittent manner, depending on how the ceramic pieces are conveyed. In the event that the ceramic pieces are conveyed all together, that is, no space between them, the supply may be performed in a continuous manner, that is, as the layer of glaze freezes on the conveyor device, it is deposited on the ceramic pieces in a continuous manner. In the event that the ceramic pieces are conveyed with a certain space between them, the supply of glaze on the conveyor belt is performed in a discontinuous or intermittent manner, the supply of glaze, the speed of the ceramic piece conveyance line, and the speed of the glaze conveyor device being synchronized so that each plate of frozen glaze is deposited exactly on each ceramic piece. The corresponding control elements and sensors may be arranged to that end.

The layer of glaze on the conveyor belt, due to the low percentage of water in the mixture, has a viscosity such that once it is arranged on the conveyor belt it does not spread out, and occupy the same surface at all times. Thus, the cross-section of the surface occupied by the layer of glaze occupies a length substantially equal to the length of the cross-section of the ceramic pieces to be glazed, such that once the plate of glaze is frozen and deposited on the ceramic pieces, said plate occupies substantially the same surface of the ceramic piece that is to be glazed. In the same manner, in the case of the discontinuous or intermittent supply of the glaze, the layer of glaze supplied for each plate must additionally have a longitudinal section dimension substantially equal to the longitudinal section dimension of the ceramic pieces to be glazed. The regulation of the length of the cross-section can be done by modifying the width of the supply element, for example, in the case of the box, it can be exchanged for another one having a width suited to the width of the ceramic pieces to be glazed, or by means of adjustable side stops. The amount of glaze applied on each piece can also be regulated. This regulation can be performed either by modifying the glaze supply flow (which will create a layer of glaze of greater or smaller thickness), by modifying the speed of the conveyor belt, or else a combination of both.

### Brief description of the drawings

For the purpose of illustrating the following description, a sheet of drawings is attached to the present specification in which a figure depicts, by way of non-limiting example, the essence of the present invention according to a particular embodiment, and in which:

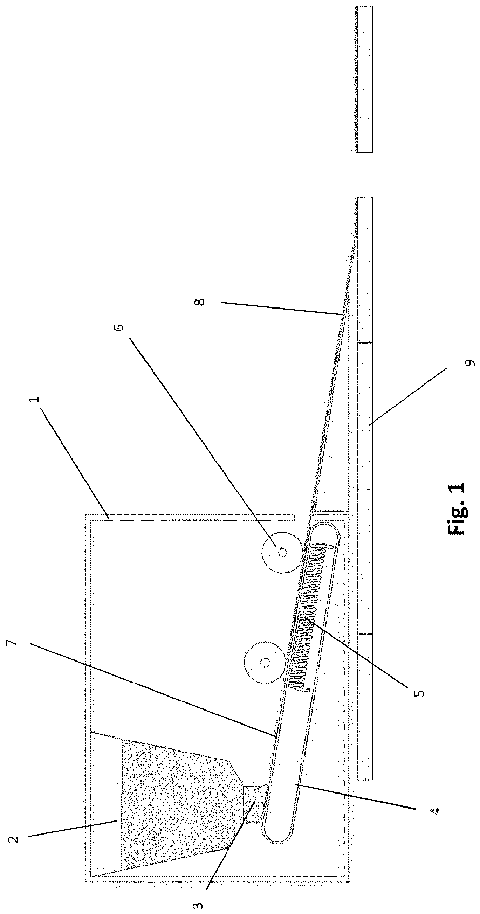

- Figure 1: schematically shows a depiction of an example of the application device for applying frozen glaze according to an embodiment of the present invention;

The following reference signs can be seen in said figure:
1 Chilled enclosure
2 Glaze storage receptacle
3 Glaze metering device
4 Conveyor belt
5 Freezing coil
6 Rollers
7 Layer of viscous glaze
8 Plate of frozen glaze
9 Ceramic pieces

### Description of the invention

The In view of the mentioned figures, and according to the numbering used, a schematic exemplary embodiment of the invention can be seen therein, in which there is described a device comprising the parts and elements indicated and described in detail below.

Thus, an embodiment of the device provided by the present invention can be schematically observed in Figure 1, as a non-limiting form of applying the method described in the present invention, which, succinctly, consists of:
- Freezing a coating, particularly a glaze in aqueous suspension, to form a plate of glaze in solid state with a transverse surface substantially equal to the transverse surface of the pieces to be glazed, and the length of which can also be substantially equal to the length of the piece to be glazed, or it can be continuous, if the pieces are supplied in a continuous manner with no space between them;
- Depositing the plate of frozen glaze on the piece to be glazed, such that once the plate of glaze is deposited on the piece, said plate melts and the glaze is applied uniformly on the entire surface of the piece.

In the example shown in Figure 1, an embodiment of the invention is depicted applied to a ceramic piece production line, in which the ceramic pieces (9) coming from a drying step, prior to the glazing step, are conveyed together without any space between them. Accordingly, the device that is shown provides a plate of frozen glaze (8) in a continuous manner, that is, as it is deposited on the ceramic pieces (9) and melts on them, it is gradually generated due to the continuous freezing of the supplied glaze. As mentioned earlier, the invention is not limited to the continuous distribution of frozen glaze, rather this distribution could be performed in a discontinuous or intermittent manner, being adapted to the inflow of pieces to be glazed.

The device includes a glaze storage receptacle (2), for example, a hopper, or a feed line coming from a main receptacle, or a mixer in which the glaze is mixed and formed, and a metering device (3). Preferably, the device includes a pre-cooling unit for pre-cooling the glaze at a temperature close to the freezing temperature. Preferably, the nozzle of the metering device (3) through which the glaze is supplied has a width substantially equal to the width of the ceramic pieces (9) to be glazed, or it can be adjusted to the desired width. The glaze is supplied from the receptacle (2), by means of the metering device (3), to a freezing plate, which is usually the base of a conveyor belt. The metering device may be formed by a plurality of nozzles/valves, or any other element suitable for supplying glaze in aqueous suspension on a surface.

By means of regulating the metering device in combination with the conveyor belt travel speed, the thickness of the plate of glaze will be determined by said metering device. According to a particular embodiment, additionally, control of the thickness of the plate of glaze can be performed with a calibrating device, for example, by means of rollers (6), in the pre-freezing area and/or in the freezing area, which limit, and where appropriate reduce, the thickness of the layer of glaze.

The glaze supplied from the box is deposited on a freezing plate, said freezing plate usually being a conveyor belt (4), said conveyor belt (4) being operated by at least one motor, and the conveyor belt (4) being of a non-stick material. The glaze supplied on the conveyor belt (4) forms a layer of glaze (7) in aqueous suspension, with a percentage of water of about 15 %, and due to the viscosity of the mixture said layer of glaze (7), it does not spread out. To improve the viscosity, both above and below the freezing temperature, is envisaged that chemical additives can be added to the mixture of the glaze. Said additives can serve to modify the freezing temperature, or the suitable supply temperature.

In the embodiment shown by way of example, said freezing device comprises two elements. A first element consists of a coil (5) arranged below the conveyor belt (4) through which there is circulated a liquefied gas, such as liquid nitrogen. Liquid nitrogen at atmospheric pressure is at -195.8 °C (boiling temperature of nitrogen), therefore as it passes close to the layer of glaze (7), it will cause the mixture of glaze in aqueous suspension to quickly freeze, which causes a plate of glaze (8) in solid state to be generated.

There can be one or more calibration rollers, and they can have different thickness reduction steps.

One or more of said rollers can act on the layer of glaze in viscous state (7) (non-frozen) and one or more rollers can act on the plate of glaze in frozen state (8) (rigid layer). One or more of the rollers is also envisaged to be provided with a liquefied gas circulation system, which will facilitate freezing, and particularly the calibration of the thickness of the plate of glaze during the freezing phase. At least the last of the rollers (6) is arranged such that the distance from the edge of the roller (6) to the conveyor belt (4) is equal to the desired thickness of the plate of frozen glaze (8). Once the glaze is frozen, the conveyor belt (4), arranged above the conveying system for conveying ceramic pieces (9) in the production line, will lead said plate of frozen glaze (8) and deposit it on the line of ceramic pieces (9) moving on the conveying system of the production line.

It is envisaged that the last area, the area for applying the plate of glaze on the ceramic piece (9), comprises a chute, preferably also chilled so as to prevent melting before coming into contact with the ceramic piece.

When the plate of frozen glaze (8) comes into contact with the surface of the ceramic pieces (9), said plate of glaze will quickly melt since the ceramic pieces (9) are at a temperature of between 75 and 100 °C after going through the drying step, it will lose its rigidity and adapt to the shape of the surface of the ceramic piece (9).

Preferably all the elements of the application device for applying frozen glaze on ceramic pieces are arranged in a chilled enclosure (1), which guarantees that the room temperature will not affect the operation of the device, said chilled case (1) having at least one opening for the outlet of the plate of frozen glaze.

Some auxiliary elements, such as the conveyor belt drive motor, electronic control elements of the metering device, or others, may be located outside the chilled area.

The device comprises sensors for controlling the flow of the supply of glaze, the temperatures, the coating product before and after freezing, the supply speed of the frozen product, the thickness of the frozen product plate, and, in general, all the parameters intervening in the process.

Likewise, the supply and application speed will be synchronized with the flow speed of the pieces on which the frozen product is to be applied.

Any variation of elements that does not affect the essential features of the described object must be understood as comprised within the object of the invention.

## Claims

1. Method of applying a surface coating product, comprising the following steps:
- forming a laminar layer of the coating product,
- cooling the laminar layer at a temperature below freezing point
- applying the frozen laminar layer on the corresponding surface in a continuously or discontinuously, being the dimensions of the layer of the surface coating product equal to or somewhat larger than the surface on which it is applied.

2. Method of applying a surface coating product, according to claim 1, **characterized in that** the cooling is performed by means of using a liquefied gas, such as nitrogen, oxygen or carbon dioxide.

3. Method of applying a surface coating product, according to any of claims 1 to 2, **characterized by** additionally comprising a previous step of pre-cooling the coating product.

4. Method of applying a surface coating product, according to any of claims 1 to 3, **characterized in that** it comprises a previous step of adding viscosity- and deformability-modifying chemical additives and a previous step of adding freezing temperature-modifying chemical additives.

5. Method of applying a surface coating product, according to any of claims 1 to 4, **characterized in that** it additionally comprises, a step of melting the plate of coating product on the coated surface.

6. Method of applying a surface coating product, according to any of claims 1 to 5, **characterized in that** the coating product is a glaze and the surface is the surface of a ceramic piece.

7. Method of applying a surface coating product, according to claim 6, **characterized in that** the water content of the glaze is up to 20%, and particularly up to 15%.

8. Method of applying a surface coating product, according to any of claims 1 to 7, **characterized in that** it additionally comprises a step of regulating and calibrating the thickness of the laminar plate of glaze.

9. Device for carrying out the method of claims 1 to 8 in glaze coating on ceramic piece production lines, **characterized in that** it comprises the following elements:
- a storage receptacle for storing the coating product in suspension or a supply line for supplying the coating product in suspension, or a mixing unit producing the coating product in suspension;
- a supply and metering element for supplying and metering the coating product onto a receiving surface, connected to the storage receptacle, to the supply line or to the mixing unit;
- a conveying system for conveying the coating product from the supply area to the application area;
- a freezing device for freezing the coating product.

10. Device for carrying out the method of claims 1 to 8 in glaze coating on ceramic piece production lines, according to claim 9, **characterized in that** the freezing device is a condensing unit or a liquefied gas circulation loop, being one of the following
• a coil arranged below the surface of the conveying system
• a coil arranged above the surface of the conveying system
• one or more freezing rollers

11. Device for carrying out the method of claims 1 to 8 in glaze coating on ceramic piece production lines, according to any of claims 9 to 10, **characterized in that** the conveyor device is a conveyor belt, and the receiving surface is a receiving plate, where said receiving plate can be formed by the surface of the conveyor belt, and **in that** the application area additionally comprises a chute, also preferably chilled.

12. Device for carrying out the method of claims 1 to 8 in glaze coating on ceramic piece production lines, according to any of claims 9 to 11, **characterized in that** it comprises a pre-cooling unit for pre-cooling the glaze prior to the freezing thereof.

13. Device for carrying out the method of claims 1 to 8 in glaze coating on ceramic piece production lines, according to any of claims 9 to 12, **characterized in that** the freezing device, at least one part of the conveyor device, and the freezing plate are arranged in a chamber or enclosure, which the conveyor device goes through at least in the area facing the supply, and **in that** the chamber is provided with a chilling system.

14. Device for carrying out the method of claims 1 to 8 in glaze coating on ceramic piece production lines, according to any of claims 9 to 13, **characterized in that** it additionally comprises a device for regulating and calibrating the thickness of the laminar plate of glaze.

15. Device for carrying out the method of claims 1 to 8 in glaze coating on ceramic piece production lines, according to claim 14, **characterized in that** the device for regulating and calibrating the thickness of the laminar plate of glaze is one of the following:
• one or more calibration rollers, in one or more thickness reduction steps
• opposite plates
• an extrusion nozzle.
